# EUROPEAN PATENT APPLICATION

(11) **EP 4 799 718 A1**
(43) Date of publication of application: **02.09.2026**
(21) Application number: 26160009.2
(22) Date of filing: 23.02.2026
(51) Int. Cl.: B01F 23/213, B01F 25/10, B01F 25/313, B01F 25/431, F01N 3/20, F01N 3/28

(54) **MIXER FOR AN AFTER-TREATMENT SYSTEM OF A COMBUSTION ENGINE**

(30) Priority: 26.02.2025 IT 202500003819
(71) Applicant: FPT Industrial S.p.A., 10156 Torino (IT)
(72) Inventor: COSTA, Simone, 10156 Torino (IT); INGHILTERRA, Giuseppe, 10156 Torino (IT); SCHLEGEL, Reto, 10156 Torino (IT)
(74) Representative: Fiume, Orazio

(57) **Abstract**

A mixer (1) for an exhaust gas after-treatment system (ATS), comprising at least one tubular element (2) defining a longitudinal development axis (A), wherein the tubular element (2) is provided with an annular inlet (IN1) for the introduction of exhaust gas into it, wherein the inlet is provided with a closing means (W1, W2, SS) arranged to vary an outflow area of the inlet (IN1), in order to vary an outflow rate of exhaust gas into the tubular element (2).

## Description

### Technical field

The present invention relates to a mixer for an after-treatment system (ATS). In particular, for those ATS in which a urea-based agent is introduced in order to reduce NOx species.

### State of the art

After-treatment systems are commonly used to reduce pollutant emissions. The reduction of NOx is mainly achieved by a selective catalytic reduction (SCR) system. The ammonia (NH₃) required for the reduction of NOx is usually sprayed as a liquid with dissolved urea, commonly AdBlue^{®} or DEF (water with 32.5% urea).

The evaporation of the liquid (water) and the decomposition (thermolysis and hydrolysis) of the urea require a certain amount of energy. This energy is usually provided by heat exchange with hot exhaust gas. However, at lower exhaust gas temperatures, not only is less energy available, although still sufficient, but the available temperature difference between the exhaust gas and the injected liquid, which enables heat exchange, is significantly reduced. Another factor worsening the evaporation process is that heat transfer is less efficient at low mean gas velocities.

The overall result is a reduction in evaporation, with the consequent risk of solid deposits. Several dosing systems have been developed and tested in attempts to increase exhaust gas turbulence to improve evaporation of the urea-based liquid; however, this leads to an increase in backpressure, and thus pumping losses affect the overall engine efficiency.

In EP3462002 and EP3141719, the same applicant discloses methods and devices aimed at favouring AdBlue hydrolysis. In order to make ATS warm-up as fast as possible, it is known to implement a flap valve usually arranged between the turbine and the inlet of the ATS. The backpressure produced by the flap valve increases pumping losses, which must be compensated by an increase in fuel injection, leading to faster heating of the exhaust gas and, consequently, of the ATS.

The flap valve represents a dissipative device that wastes energy in order to force the ATS to become fully operative during cold start.

Unless explicitly excluded in the detailed description that follows, the contents of this section are to be considered an integral part of the detailed description.

### SUMMARY OF THE INVENTION

Therefore, the main object of the present invention is to improve evaporation of a urea-based purifying liquid.

The main principle of the present invention is a mixer for an exhaust gas after-treatment system, comprising at least one tubular element provided with an annular inlet for introducing exhaust gas, wherein the annular inlet is provided with shutting means arranged at the inlet so as to vary an efflux area of the inlet. Consequently, an efflux speed of the exhaust gas within the tubular element is varied and, therefore, the backpressure is also varied.

It should be clear that a conventional flap valve arranged upstream of the mixer does not impart an acceleration of the gas flow at the mixer and, in particular, at the spray cone of the urea-based agent injected into the mixer. Advantageously, a higher exhaust gas efflux speed concentrated at the mixer can assist evaporation of the urea-based agent under certain operating conditions.

The efflux area can be varied in different ways.

According to a first embodiment of the invention, a plurality of blades is arranged at the mixer inlet to guide the exhaust gas entering the mixer in a swirling manner. The efflux area is varied by varying the operative positions of the plurality of blades. According to this first embodiment, not only an increase in exhaust gas speed is obtained, but also a variation of the tangential component of the gas speed, so as to vary a swirling motion.

According to a second embodiment of the invention, a sliding sleeve is arranged so as to slide over the tubular element to vary the efflux area of the inlet of the mixer. According to the second embodiment, a plurality of fixed or swinging blades is arranged at the inlet of the tubular element. Advantageously, it is possible to control the efflux area and the tangential component in a semi-independent manner with respect to each other.

According to a third embodiment, similar to the second embodiment, each blade is fixed and twisted along its longitudinal development axis, so that two cross-sections at different positions along the longitudinal development of the mixer appear rotated with respect to each other. The sliding sleeve is arranged to move from a fully throttled configuration to a fully open configuration. The blades are arranged so as to impart a maximum tangential component at the efflux area corresponding to the fully throttled configuration and to be substantially radial along the remaining length. Therefore, when the sliding sleeve is in the fully open configuration, the tangential component is reduced and the efflux area is increased, thereby reducing exhaust gas velocity and consequently the backpressure generated by the mixer, whereas when the sliding sleeve is in the maximum throttling configuration, exhaust gas velocity and tangential component are maximized, since only the angled portion of the blades operates, while the radial portion is covered by the sleeve. According to this variant, the tangential component and the efflux speed are managed in a combined manner.

In the previous variant, including swinging blades and a sliding sleeve together, the efflux area (and thus the overall exhaust gas speed) and the tangential component of the exhaust gas can be managed in a semi-independent manner. The sliding sleeve, as described hereinafter, may have the form of annular plates or may have a cylindrical shape. Further embodiments of the invention may optionally include the concepts disclosed in EP3462002 and EP3141719, wherein a portion of the exhaust gas is diverted from the inlet of the tubular element into a space surrounding the tubular element to heat it. In this case, longitudinal fins are attached to the external surface of the internal tubular element and are spaced from the external tubular element so as to increase thermal performance. Thus, two stages may be identified. During a first stage, the exhaust gas flow is split into two physically separate gas portions: a first portion intended to be directly mixed with the urea-based agent and a second portion exploited to yield heat to the first portion. During a following second stage, the two gas portions are rejoined with each other before entering the SCR arranged downstream of the present mixer. However, the annular space around the tubular element defines a bypass that limits backpressure when the efflux area is at its minimum value.

The efflux area may be controlled as a function of a control signal. The control signal may consist of the exhaust gas flow rate, which forces the efflux area to increase against the action of at least one resilient element, such as a spring.

A control signal may consist of an electrical signal controlling an actuator arranged to vary the efflux area and, preferably, also the swirl imparted to the gas flow entering the mixer. In this context, the control signal is a function of the exhaust gas flow rate generated by the internal combustion engine, which can be easily calculated by knowing turbine speed or on the basis of speed-density formulas.

The control signal may be a function of exhaust gas temperature and/or of SCR temperature.

In addition, the control signal may be managed to reach a predetermined target backpressure value.

Advantageously, the backpressure generated at the mixer may be exploited to increase fuel injection and improve heating of the ATS and, in turn, evaporation of the urea-based agent. The flap valve can be avoided. Therefore, the entire ATS may be free of a flap valve.

According to further control schemes, the control signal is a function of at least two of the previously mentioned physical quantities.

The dependent claims disclose preferred embodiments of the invention forming an integral part of the description.

### BRIEF DESCRIPTION OF THE FIGURES

The invention will become fully clear from the following detailed description, given by way of a merely exemplifying and non-limiting example, to be read with reference to the attached drawing figures, wherein:
- **Figure 1** shows a longitudinal cross-section of an example of a mixer according to the present invention, arranged in the canning of an ATS,
- **Figure 2** illustrates a lateral view of the embodiment of Figure 1,
- **Figures 3, 3a and 3b** illustrate a lateral view of a schematic representation of another embodiment and corresponding cross-sectional views at different distances from a support plate.

The same reference numerals and letters in the figures designate the same or functionally equivalent parts. According to the present invention, the term "second element" does not imply the presence of a "first element"; first, second, etc. are used only for improving the clarity of the description and shall not be interpreted in a limiting manner.

### DETAILED DESCRIPTION

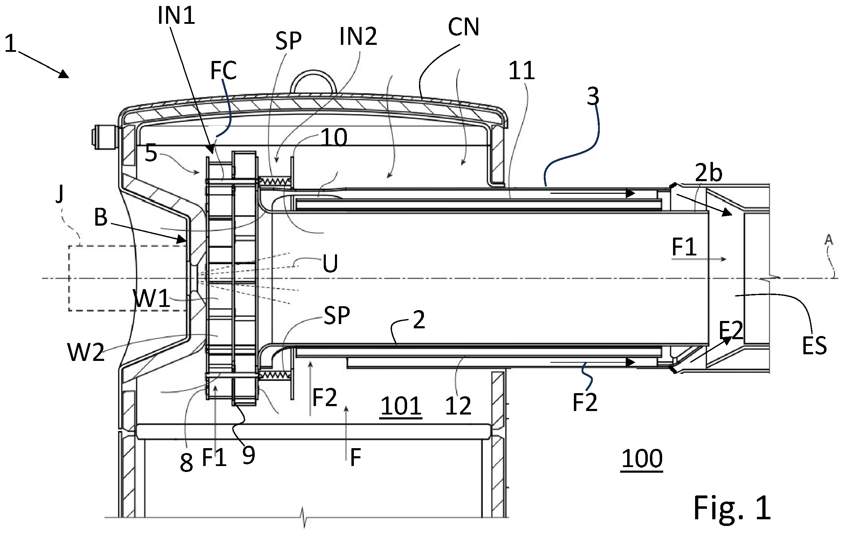

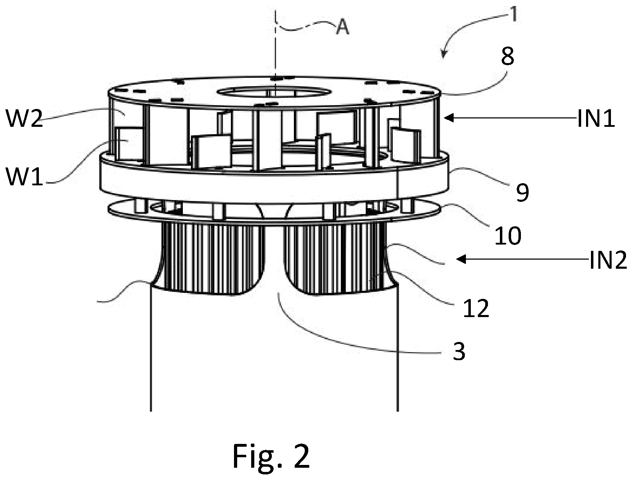

Figures 1 and 2 show a mixer 1 for an exhaust gas after-treatment system (ATS) 100 that can be used in an engine system of a vehicle such as a heavy or commercial vehicle.

The mixer 1 may be housed in a canning 101 defined by the ATS system 100 as illustrated in Figure 1, or may be a separate component, namely having its own canning, arranged along the ATS. The mixer is arranged immediately upstream of a selective catalytic reduction (SCR) unit according to a direction of exhaust gas flow from an exhaust manifold of a combustion engine toward the environment.

The mixer 1 performs the task of hydrolyzing a urea-based agent within the exhaust gas flow. An injector J is arranged to inject a urea-based agent U into the mixer 1, and in particular into the tubular element 2 described hereinafter. The mixer has the shape of a right prism with a development direction indicated by reference sign A. The development direction also represents an axis of symmetry. Preferably, the shape of the mixer is approximately cylindrical; for this reason, the development direction A is indicated as an axis of rotational symmetry. However, the rotational symmetry is not essential for the purposes of the present invention.

The mixer comprises a tubular element 2 into which the urea-based agent is sprayed. The injector J is arranged along the development direction A so as to produce a so-called "spray cone" U.

The injector is fixed on a base B which closes the tubular element 2.

The mixer has an annular inlet IN1 for exhaust gas, arranged proximate to the base B and annular with respect to the spray cone defined, in operation, by the injector.

The exhaust gas entering the mixer follows a curved path in order to adapt to the longitudinal development A of the tubular element. Thus, the gas flow path is incident with the spray cone.

The annular inlet IN1 may be provided with blades W2 arranged to impart a swirl to the exhaust gas flow entering the mixer. The blades may control both the swirl and the efflux area of the inlet of the mixer, or substantially only the swirl, as described below, namely the tangential component of the gas velocity.

The blades are preferably evenly distributed along the annular inlet in order to render the swirling gas flow axially symmetric. This aspect may be advantageous because if the resultant direction of the efflux speed of the gas is incident with the inner wall of the tubular element 2, there is a greater probability of solid crystal deposit formation. Preferably, at least a subgroup of the blades is configured to swing so as to vary a tangential component of the velocity imparted to the gas flow.

In particular, each swinging blade is capable of rotating about a respective axis which is parallel to the development axis A or parallel to generatrices of a cone having its vertex on the development axis A.

The blades, as illustrated in Figure 1, are arranged along a circumference concentric with the tubular element. The annular inlet IN1 of the tubular element may comprise a frusto-conical pipe arranged annularly at the inlet, with the swinging blades having a rotation axis approximately parallel to the development of the frusto-conical pipe or to the generatrices of the truncated cone. Reference is made to EP2339137 of the same Applicant.

For this reason, it may be assumed that the rotation axis of the blades is "approximately parallel" to the development axis A, since the purpose is to generate a swirl around the development axis A. The term "approximately" indicates that the rotation axis may intersect the development axis A at a point remote from the annular inlet IN1.

The remaining blades, other than the swinging blades, may be fixed. In particular, they may be arranged radially with respect to the development axis A or may be ideally tangent with respect to a circumference coaxial with the development axis A and enveloped within the tubular element 2. In this latter case, the fixed blades impart a first swirl contribution to the exhaust gas, while the swinging blades impart a second, variable contribution.

According to a preferred embodiment, the blades are connected to two annular plates 8 and 9, parallel to each other.

In particular, both the first and the second plates 8, 9 comprise blades W1, W2. For example, the blades supported by the second plate 9 are swinging and rotatably fixed thereto, alternating with fixed blades carried by the first plate 8. Preferably, elastic elements are associated with each of the swinging blades in order to maintain the blades in the position defining a minimum efflux area configuration. When the exhaust gas flow rate exceeds a predetermined threshold, the blades are forced to rotate against the action of the elastic means, increasing the efflux area and simultaneously reducing the tangential component of the speed imparted to the gas flow.

According to another implementation of the invention, all blades are fixed with respect to the respective first and second plates 8, 9, but one of the first and second plates is axially movable along the development axis A.

At least one elastic means is arranged to urge the movable plate toward the minimum efflux area configuration. Also in this case, an increase in exhaust gas flow rate tends to move the movable plate away by increasing the efflux area.

Consequently, the movable plate acts as a sliding sleeve. When the plates are fully spaced from each other, an intermediate portion devoid of blades may be defined between the plates, thereby obtaining a reduction of the swirl effect imparted to the gas flow with respect to a configuration of minimum efflux area.

Alternatively, all blades are fixed to only one of the two plates 8, 9, such that when one plate begins to move away from the other, an intermediate blade-free space is created. Figure 2 shows a perspective view of a device according to another embodiment of the invention. The annular plates 8 and 10 are parallel and fixed with respect to each other, while an intermediate plate 9, parallel to the other two plates, is movable along the development axis A.

A number of second blades W2 is fixedly supported by the fixed plate 8, while a number of first blades W1 is supported by the movable plate 9.

The second blades act as guides for the movable plate, passing through corresponding through openings formed in the movable plate. It is evident from Figure 2 that the longitudinal extension of the second blades W2 is greater than that of the first blades W1.

The first blades are alternated with the second blades along the circumference of the inlet opening.

Springs SP are arranged between the fixed plate 10 and the movable plate 9 to urge the latter toward the minimum efflux area configuration. When the plates are spaced so as to define the maximum efflux area, the tangential component of the speed imparted to the gas flow is reduced because the second blades W2 do not cover the entire distance between plates 8 and 9.

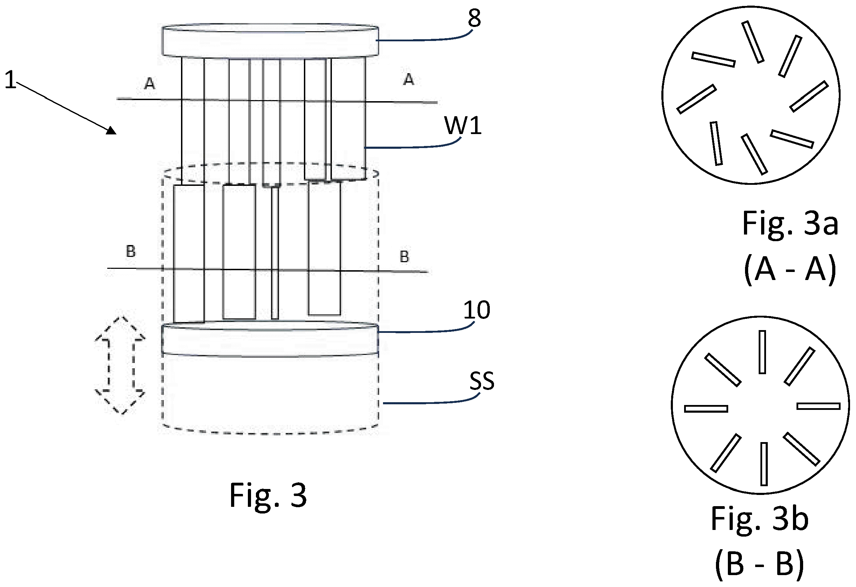

According to Figure 3, blades W1 are fixed and supported by plate 8, while a sliding sleeve SS, having an approximately cylindrical shape, slides axially to vary the efflux area of the annular inlet IN1 of the mixer 1.

The blades are twisted along their development axis, parallel to the development axis A of the mixer, such that in a position proximal to the plate 8 they are arranged to impart a higher tangential component of velocity to the gas flow, while in a position distal from plate 8 they are arranged in an approximately radial manner with respect to the longitudinal development axis A.

Figures 3a and 3b show two cross-sections corresponding to the proximal and distal positions relative to plate 8.

The plate 8 is annular so as to receive the injector J. Therefore, the plate 8 may define the base B described above with reference to Figure 1.

According to another embodiment of the invention, all blades are rotatable in order to increase or decrease the efflux area of inlet IN1 and to control, at the same time, the swirl imparted to the exhaust flow F1.

One of the two plates 8, 9 is rotatable with respect to the other about the development axis A. Each blade has a first end hinged to one plate and a second end, opposite to the first end, hinged to the other plate. The first and second ends are hinged along two parallel but non-coaxial hinging directions.

Consequently, rotation of one plate relative to the other forces the blades to swing about their ends.

A spring biases the rotatable plate toward the configuration defining the minimum efflux area, i.e. maximum throttling. The embodiments described above may be passive, using elastic means, or active, namely including an actuator arranged to control the efflux area and optionally the swirl effect. When a movable part moves longitudinally, a linear mechanism may be implemented to control the distance between a reference part, such as plate 8, and the movable part, such as plate 9 or the sliding sleeve SS. When a movable part rotates about the longitudinal development axis A, a rotational actuator may be implemented. For example, an electric motor actuator may be provided with a pinion engaging a toothing formed along the outer perimeter of the rotatable part, such as plate 9.

Several solutions may be implemented to render control of the movable parts active.

It is clear that when adjustment of the movable parts depends on exhaust gas flow rate, actuation may be either active, via an actuator, or passive, via elastic means. Consequently, the efflux area and optionally the swirl are functions of exhaust gas flow rate.

When adjustment of the movable parts is controllable by means of an actuator, various physical quantities may be considered in the control process.

For example, the efflux area may be reduced and swirl increased when exhaust gas temperature is below a predetermined threshold. Thus, during cold start, an increase in exhaust gas velocity may partially compensate for a lower exhaust gas temperature. At the same time, an increase in backpressure leads to increased pumping losses and consequently increased fuel consumption, which favours the warm-up procedure.

Elastic means, such as springs, may be implemented even in the presence of an actuator, for example to achieve a fully open configuration of the annular inlet IN1 of the mixer in the event of actuator failure.

According to a preferred implementation of the invention, the mixer is provided with an external tubular element 3 enveloping the internal tubular element 2, and the canning CN of the mixer is arranged to direct a first exhaust gas flow F1 inside the mixer and a second exhaust gas flow F2 into the annular volume defined between the tubular element 2 and the external tubular element 3.

This implementation follows the teachings disclosed in patents EP3462002 and EP3141719 of the same applicant in order to transfer heat content of the second flow F2 to the tubular element 2, which may be provided with longitudinal fins 12 as disclosed in those patents. Since the fins 12 are longitudinal, they do not introduce any swirl in the portion of exhaust gas passing through the bypass.

Furthermore, the mixer is shaped so that the first and second exhaust gas flows rejoin externally of the internal tubular element 2. This can be understood by observing that the internal tubular element 2 is longer than the external tubular element 3, i.e. it protrudes beyond the external tubular element 3.

This implies that the internal tubular element has a single inlet, namely the annular inlet IN1. This may be appreciated by observing arrows F1 and F2 in Figure 1 at the outlet section ES of the mixer.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced solely in order to better understand the invention and not as a declaration regarding the existence of known prior art. Furthermore, said features define the context of the present invention and shall therefore be considered in conjunction with the detailed description.

Further implementation details will not be described, as the person skilled in the art is able to carry out the invention based on the teaching of the above description.

## Claims

1. Mixer (1) for an exhaust gas after-treatment system (ATS), comprising at least one tubular element (2) defining a longitudinal development axis (A), wherein the tubular element (2) is provided with an annular inlet (IN1) for introducing exhaust gas therein, wherein the inlet is provided with shutting means (W1, W2, SS) arranged to vary an efflux area of the inlet (IN1), in order to vary an efflux speed of the exhaust gas within the tubular element (2).

2. Mixer according to claim 1, wherein said shutting means comprise a plurality of blades arranged equally spaced from each other, wherein each blade of said plurality of blades (W1, W2) is movable between a first operative position and a second operative position.

3. Mixer according to claim 2, wherein each blade is rotatable about a respective longitudinal axis, approximately parallel to or incident with the longitudinal development axis (A), so as to vary said efflux area and to regulate a swirl imparted to the exhaust gas passing through the annular inlet (IN1).

4. Mixer according to claim 2 or 3, wherein each blade has a first end rotatably connected to a first plate (8) and a second end rotatably connected to a second plate (9), wherein the first plate and the second plate are parallel to each other and one of the first and second plates is rotatable about the development axis (A) so as to impart a swinging movement to the blade.

5. Mixer according to claim 2, wherein said blades are fixed with respect to a first plate and a second plate (8, 9), and wherein one of the first plate and the second plate (8, 9) is axially movable along the development axis, thereby causing a variation of said efflux area.

6. Mixer according to any one of claims 1 to 5, wherein said shutting means include a sliding sleeve (9, SS) arranged to slide over the tubular element (2) along said longitudinal development axis, varying said efflux area of the annular inlet (IN1).

7. Mixer according to claim 6 when dependent on claim 1, wherein said sliding sleeve is in the form of a first annular plate (9) supporting a first plurality (W1) of blades arranged equally spaced from each other to impart a swirl to the exhaust gas passing through the annular inlet (IN1), and a second plurality (W2) of blades is supported by a second annular plate (8), wherein a blade of the first plurality of blades is alternated with a blade of the second plurality of blades, and wherein the second plurality of blades extends beyond the first annular plate (9) through corresponding through openings of the first annular plate (9).

8. Mixer according to claim 6, wherein the annular inlet (IN1) comprises a plurality of blades (W1) supported by an annular plate (8), wherein each blade of the plurality of blades is twisted about its development axis, parallel to said longitudinal development axis (A), such that a more angled portion of each blade imparts a higher tangential component of velocity to the gas flow proximal to the annular plate (8) and is substantially radial or radial with respect to said development axis (A) at a distal position from the annular plate (8).

9. Mixer according to claim 8, wherein said sliding sleeve, when proximal to said annular plate (8), defines a minimum efflux area of the inlet (IN1).

10. Mixer according to any one of the preceding claims 1 to 9, further comprising elastic means arranged to force said shutting means towards a minimum efflux area of the inlet (IN1), wherein said shutting means are configured to move towards a maximum efflux area in response to an exhaust gas flow rate passing through the inlet.

11. Mixer according to any one of the preceding claims 1 to 9, further comprising controllable actuation means arranged to vary said efflux area on the basis of a control parameter, function of at least one among:
an exhaust gas flow rate,
an exhaust gas temperature,
a temperature of a device of the ATS,
a target value of a backpressure to be generated to the combustion engine.

12. Mixer according to any one of the preceding claims, further comprising bypass means (3) arranged to divert a portion (F2) of exhaust gas (F) towards an outlet section (ES) of the mixer.

13. Mixer according to claim 1, wherein said outlet section (ES) is configured to mix a flow of exhaust gas (F1) entering through said annular inlet (IN1) and said diverted portion (F2) of exhaust gas, wherein said outlet section (ES) is external to said tubular element (2).

14. Mixer according to any one of the preceding claims, wherein said annular inlet (IN1) represents a sole inlet of the tubular element for exhaust gas.

15. Mixer according to any one of claims 12 to 14, wherein the bypass means are in the form of an external tubular element (3) enveloping the tubular element (2) so as to define an annular space around the tubular element (2).

16. Mixer according to claim 15, wherein the tubular element (2) is provided with longitudinal fins (12) arranged in the annular space, in thermal contact with the tubular element (2) and spaced apart from the external tubular element (3).

17. Mixer according to any one of the preceding claims, further comprising an injector (J) for injecting a urea-based agent, arranged along said longitudinal development axis (A) to define a spray cone (U) inside said tubular element (2) at the inlet (IN1).

18. Mixer according to claim 17 when dependent on any one of claims 12 to 16, wherein the injector is arranged so as to inject said urea-based agent only into the exhaust gas flow entering through said annular inlet (IN1).

19. ATS system comprising a mixer according to any one of the preceding claims 1 to 18.

20. ATS according to claim 19 when dependent on any one of claims 11 to 18, further comprising a control unit configured to control said actuation means as a function of a control parameter.

21. ATS according to claim 20, wherein said control parameter is function of at least one among:
an exhaust gas flow rate,
an exhaust gas temperature,
a temperature of a device of the ATS,
a target value of a backpressure to be generated to the combustion engine.

22. ATS according to claim 20 or 21, further configured to control said injector (J) on the basis of said control parameter and as a function of the efflux area determined by said shutting means.

23. Method for controlling a mixer operatively associated with an ATS of an internal combustion engine according to any one of claims 11 to 18, comprising a step of determining a value of efflux area of said annular inlet (IN1) as a function of at least one among:
an exhaust gas flow rate,
an exhaust gas temperature,
a temperature of a device of the ATS,
a target value of a backpressure to be generated towards the combustion engine.
